# EUROPÄISCHE PATENTSCHRIFT

(11) **EP 2 794 814 B1**
(45) Veröffentlichungstag und Bekanntmachung des Hinweises auf die Patenterteilung: **18.10.2017**
(21) Anmeldenummer: 12823193.3
(22) Anmeldetag: 18.12.2012
(51) Int. Cl.: C09K 11/56, H05B 33/10, H05B 33/14

(54) **LEUCHTELEMENTE MIT EINER ELEKTROLUMINESZENZANORDNUNG SOWIE VERFAHREN ZUR HERSTELLUNG EINES LEUCHTELEMENTS**
LUMINOUS ELEMENTS WITH AN ELECTROLUMINESCENT ARRANGEMENT AND METHOD FOR PRODUCING A LUMINOUS ELEMENT
ÉLÉMENTS ÉMETTEURS DE LUMIÈRE COMPRENANT UN ENSEMBLE ÉLECTROLUMINESCENT AINSI QUE PROCÉDÉ DE FABRICATION D'UN ÉLÉMENT ÉMETTEUR DE LUMIÈRE

(30) Priorität: 19.12.2011 DE 102011121358; 20.03.2012 DE 102012005449; 27.08.2012 DE 102012016759
(43) Veröffentlichungstag der Anmeldung: 29.10.2014
(73) Patentinhaber: InovisCoat GmbH, 40789 Monheim am Rhein (DE)
(72) Erfinder: SCHMIDT, Rudolf, 51149 Köln (DE); SCHMUCK, Arno, 42799 Leichlingen (DE)
(74) Vertreter: Zenz Patentanwälte Partnerschaft mbB
(86) Internationale Anmeldenummer: PCT/DE2012/001208
(87) Internationale Veröffentlichungsnummer: WO 2013/091604

(56) Entgegenhaltungen:
- WO-A1-2007/032179
- JP-A- 2005 264 108
- JP-A- 2007 224 135
- US-A1- 2008 111 108
- US-A1- 2009 102 365

## Beschreibung

Die Erfindung betrifft ein Leuchtelement mit einer Elektrolumineszenzanordnung umfassend eine Leuchtschicht (4), die anorganische Elektrolumineszenzteilchen aufweist. Derartige Leuchtelemente sind beispielsweise aus der WO 2009/030701 A1, "Elektrolumineszenz-Anordnung auf textilen Materialien", bekannt.

Aus US 2008/0111108 A1 ist es im Umfeld von Plasmazellen bekannt, ein Schutzkolloid bei der Herstellung von Phosphorteilchen einzusetzen. Da während der Herstellung Temperaturen zwischen 1000°C und 1400°C eingesetzt werden, ist auszuschließen, dass das Schutzkolloid auf den Phosphoren verbleibt. Es wird somit kein Schutzkolloid in einer Leuchtschicht offenbart. Zudem handelt es sich bei dem Plasmamaterial um ein gänzlich anderes System als bei dem Leuchtelement mit Elektrolumineszenzanordnung gemäß der Erfindung.

US 2009/0102365 A1 beschreibt die Herstellung von sehr kleinen organischen Leuchtpartikeln durch Mikrofragmentierung einer Schicht, die molekulare Leuchtfarbstoffe enthält, sowie die Aufbringung einer damit hergestellten Zubereitung per Druckverfahren. Die Haltbarkeit von Materialien, die auf organischen Leuchtpartikeln basieren, ist unbefriedigend. Zudem umfasst das Herstellungsverfahren teure Schritte, wie Elektrolithografie und Bedampfungen.

Bei der Elektrolumineszenz (auch Destriau-Effekt genannt) handelt es sich um ein Phänomen, bei dem eine leuchtfähige, anorganische Substanz, meist dotiertes Zinksulfid, zwischen den Platten eines Kondensators durch Anlegen einer hochfrequenten Wechselspannung (200 Hz - 3000 Hz) zur Emission von Licht (sichtbare elektromagnetische Strahlung) angeregt wird.

Bei den bekannten Leuchtschichten erschweren die lösungsmittelhaltigen Substanzen und die geforderte Dispersionsstabilität den Herstellungsprozess.

Es ist daher Aufgabe der Erfindung, ein umweltfreundliches Leuchtelement bereitzustellen, das kostengünstig herstellbar ist und das gleichzeitig eine besonders gute Haltbarkeit aufweist.

Diese Aufgabe wird mit einem gattungsgemäßen Leuchtelement gelöst, bei dem die Leuchtschicht, bezogen auf ihr Trockengewicht, mindestens 10 Gew.-% eines in Wasser dispergierbaren oder in Wasser löslichen Schutzkolloids aufweist.

Das Leuchtelement kann wenigstens einen Träger und wenigstens eine darauf aufgebrachte Elektrolumineszenzanordnung umfassen, wobei die Elektrolumineszenzanordnung wenigstens eine Frontelektrode, eine Leuchtschicht, eine Isolierschicht und eine Rückelektrode aufweist. Leuchtschicht und Isolierschicht können dabei auch in einem Schritt bzw. in einer Schicht aufgetragen werden.

In einer bevorzugten Ausführungsform der Erfindung weist das Leuchtelement auf einem Träger die folgenden Schichten auf:
- optional, jedoch bevorzugt eine Haftschicht, die die Adhäsion der darüber liegenden Schichten mit dem Substrat verbessert,
- eine transparente und elektrisch leitfähige Schicht als Frontelektrode,
- eine Schicht, die eine durch ein elektrisches Wechselspannungsfeld anregbare Leuchtsubstanz enthält als Leuchtschicht,
- eine Isolierschicht mit hoher Dielektrizität,
- eine Schicht hoher Leitfähigkeit als Rückelektrode,
- optional, jedoch bevorzugt Leiterbahnen als Anschluss der Frontelektrode,
- optional, jedoch bevorzugt eine Barriereschicht und
- Kontakte sowie Anschlüsse für eine Wechselspannungsquelle.

Die Elektrolumineszenzanordnung kann statt wie oben beschrieben auch in umgekehrter Reihenfolge auf den Träger aufgebracht sein.

Das gesamte Paket aus allen auf einen Träger aufgebrachten Schichten wird im Folgenden auch als Schichtpaket bezeichnet. Das Schichtpaket umfasst somit die Elektrolumineszenzanordnung und damit auch die Leuchtschicht(en).

Sowohl der Träger als insbesondere auch eine oder mehrere der oben beschriebenen Schichten des Schichtpakets können ein oder mehrlagig bzw. mehrschichtig aufgebaut sein. Dabei können sich die einzelnen Lagen bzw. Schichten gleicher Funktion in ihrer Zusammensetzung unterscheiden.

Es hat sich herausgestellt, dass Leuchtelemente, bei welchen eine oder mehrere der auf dem Träger befindlichen Schichten des Schichtpakets, insbesondere eine oder mehrere Leuchtschichten, wenigstens ein in Wasser dispergierbares oder in Wasser lösliches Schutzkolloid aufweisen, besonders einfach herstellbar sind.

Beim Trocknen eines derartigen schutzkolloid- und wasserhaltigen Schichtpakets, bzw. einer derartigen Leuchtschicht, kann es zu einer starken Schrumpfung kommen, wodurch der gesamte Schichtverband zerstört werden kann. Es wird daher vorgeschlagen, dass eine oder mehrere Schichten des Schichtpakets, insbesondere eine oder mehrere Leuchtschichten, einen oder mehrere Weichmacher aufweisen.

In einer bevorzugten Ausführungsform sollte mindestens ein Weichmacher in mindestens einer Schicht des Schichtpaketes, bevorzugt in einer Leuchtschicht, in einer Menge enthalten sein, die eine unerwünschte Brüchigkeit, Sprödigkeit und Deformation des Leuchtelements beim Trocknen verhindert. Die einzelnen Komponenten sollten daher so aufeinander abgestimmt sein, dass das Leuchtelement selbst bei einem Biegeradius von 1 cm, bevorzugt von 0,5 cm und besonders bevorzugt von 0,3 cm nicht bricht. Dies gilt sowohl für eine Zugbelastung (Schichtseite außen) als auch für eine Druckbelastung (Schichtseite innen). Biegeradien werden im Rahmen der Erfindung durch eine 180°-Umschlingung (zur Hälfte) von Walzen mit definiertem Radius (entspricht dem Biegeradius) bestimmt.

In einer vorteilhaften Ausführungsform enthält das Schichtpaket insgesamt 0,6 g Weichmacher pro m² bis 2,0 g Weichmacher pro m², bevorzugt 0,8 g Weichmacher pro m² bis 1,2 g Weichmacher pro m².

Um während der Herstellung des Leuchtelements eine hohe Dispersionsstabilität der für das jeweilige Beschichtungsverfahren verwendeten Zubereitungen zu erreichen, ist erfindungsgemäß vorgesehen, dass das resultierende Schichtpaket und insbesondere solche Schichten darin, die dispergierte oder suspendierte Teilchen enthalten, wie die Leuchtschicht, ein Schutzkolloid aufweisen, in einer Menge von mindestens 10 Gewichtsprozent (Gew.-%), insbesondere von 10 Gew.-% bis 40 Gew.-%, bezogen auf das Gewicht nach Trocknung. Es ist vorteilhaft, wenn das Schichtpaket bezogen auf sein Trockengewicht maximal 0,1 Gew.-% Wasser enthält. Eine hohe Dispersionsstabilität ist für alle pigmenthaltigen Zubereitungen wichtig, die zur Herstellung der Schichten des Schichtpakets der Erfindung verwendet werden und besonders wichtig für die Leuchtpigmente enthaltenden Schichten. Die Pigmente werden dabei in der wässrigen Dispersion mit Hilfe des Schutzkolloids während der Beschichtung in Schwebe gehalten.

Besonders vorteilhaft ist es, wenn das Schichtpaket bezogen auf das Trockengewicht maximal 0,05 Gew.-% organische Lösungsmittel mit Ausnahme von Ethanol, Isopropanol oder Butanolen enthält.

Als Schutzkolloide können unterschiedliche Materialien zum Einsatz kommen. Schutzkolloide oder Flockungsschutzmittel sind meist Polymersysteme, die in Suspensionen bzw. Dispersionen ein Agglomerieren, Koagulieren oder Ausflocken einer emulgierten, suspendierten oder dispergierten Substanz verhindern sollen. Eine wesentliche Eigenschaft von Schutzkolloiden ist, dass sie bei der Solvatation große Mengen von Wasser binden. Dadurch werden in wässrigen Lösungen in Abhängigkeit von der Konzentration hohe Viskositäten erreicht. Anders als Emulgatoren erniedrigen Schutzkolloide die Grenzflächenspannung zwischen einem eingelagerten Polymerpartikel und dem umgebenden Wasser meist nicht. Schutzkolloide bilden keine Mizellen und werden zur Stabilisierung von Dispersionen eingesetzt.

Als Schutzkolloide werden sowohl Naturstoffe wie Gelatine, Stärke, Chitosan, Casein und Dextrin verwendet, aber auch Derivate von Naturstoffen, wie Cellulose-Derivate, z. B. Hydroxypropylmethylcellulose (HPMC) oder Carboxymethylcellulose (CMC) oder modifizierte oder teilweise abgebaute Gelatine. Es können auch Polymere, wie Polyvinylalkohole, Polyvinylpyrrolidone, Polyacrylsäuren und Polyacrylamide als Schutzkolloide zum Einsatz kommen, sowie Wachsemulsionen, z.B. ein nicht-ionischer Ethylen-Vinylacetat Copolymerwachs. Als Schutzkolloid besonders bevorzugt ist Gelatine, die neben ihrer Tragfähigkeit eine gute Isolatorwirkung aufweist.

Insbesondere wenn Schutzkolloide aus Naturstoffen verwendet werden, ist der Einsatz von Bioziden empfehlenswert, um die Haltbarkeit von Gießlösungen zu verbessern. Bevorzugt werden Biozide aus der Gruppe der Benzisothiazolone eingesetzt, z.B. Proxel (1,2-Benzisothiazol-3(2H)-on). Die Biozide werden bevorzugt in Mengen von 0,003 g/m² bis 0,03 g/m², insbesondere von 0,005 g/m² bis 0,01 g/m² aufgetragen.

Weitere, zum Teil optionale Bestandteile, die ein Leuchtelement der Erfindung umfasst, werden im Folgenden näher beschrieben.

Ein Träger der Erfindung, sollte vorzugsweise flexibel sein und insbesondere einen für das Leuchtelement je nach beabsichtigter Anwendung gewünschten Biegeradius (siehe oben) ermöglichen. Zudem ist es vorteilhaft, ihn unter dem Gesichtspunkt aus bekannten Trägermaterialien auszuwählen, dass er für das Verfahren zur Aufbringung des Schichtpaketes inklusive der Elektrolumineszenzanordnung gut geeignet ist.

Als Trägermaterialien können klare, transparente und flexible Folien dienen, die zum Beispiel auf Basis der folgenden Polymere oder Gemischen daraus hergestellt sind: Polyethylen, Polyester, Celluloseacetat, insbesondere Cellulosetriacetat, PET (Polyethylenterephthalat), Polycarbonat, PLA (Poly Lactic Acid), Polyamid 6, Polyamid 12, PEN (Polyethylennaphthalat), PTFE (Teflon® = Polytetrafluorethylen), POM (Polyoximethylen) und ETFE (Ethylentetrafluorethylen).

Bei dem Träger kann es sich auch um eine Textilie handeln. Insbesondere bei der Verwendung von Textilien als Träger ist es vorteilhaft, wenn der Träger eine Grundierungsschicht aufweist, um die Saugfähigkeit und/oder die Oberflächenbeschaffenheit für die folgenden Beschichtungsschritte anzupassen. So könnte z.B. die Beschichtung von Oberflächen mit Unebenheiten zu Fehlern in der Beschichtung führen. Die Grundierungsschicht(en) kann/können z.B. ein thermoplastisches Polyurethan aufweisen, um die Oberfläche des Trägers zu glätten. Diese Schicht ist vorzugsweise mit Wasser verdünnbar.

Als Haftschicht eignen sich die für Gießverfahren bekannten Substrierungen und Oberflächenbehandlungen des Trägers. Bevorzugt enthält die Haftschicht Gelatine, insbesondere in einer Menge von 1,5 g/m² bis 3,2 g/m² und besonders bevorzugt von 1,8 g/m² bis 2,8 g/m².

Zudem können der Haftschicht weitere Stoffe zugegeben werden, die z.B. die Begießbarkeit und die Stabilität verbessern, wie z.B. Biozide und Weichmacher wie oben beschrieben, Netzmittel sowie weitere Begusshilfsmittel.

Das Leuchtelement kann eine alkohollösliche, transparente, leitfähige Frontelektrode aufweisen. Diese Frontelektrodenschicht umfasst einen leitfähigen Stoff und sollte vorzugsweise eine Trockenschichtdicke von weniger als 20 µm aufweisen.

Bevorzugt weist die Frontelektrode neben ihrer hohen Leitfähigkeit auch eine hohe Transparenz auf und absorbiert das in der darüber liegenden Leuchtschicht emittierte Licht nicht zu stark.

Eine besondere Ausführungsform sieht vor, dass als Frontelektrode PEDOT:PSS verwendet wird, das z.B. von der Firma Agfa-Gevaert N.V. unter dem Handelsnamen Orgacon oder von der Firma Hereaus unter dem Handelsnamen Clevios angeboten wird. Um eine fehlerfreie Benetzung der Gießlösung mit einer Unterlage zu garantieren, ist es vorteilhaft, wenn die Oberflächenspannung mit Hilfe von geeigneten anionischen, kationischen oder nichtionischen Netzmitteln angepasst wird. Die Frontelektrode kann ganzflächig aufgetragen werden und ihre Trockenschichtdicke beträgt vorzugsweise 2 µm bis 15 µm.

Die Frontelektrode kann alternativ auch Teil des Substrates sein. In Textilien können z.B. leitende Garne bzw. Fäden verwendet werden. Dadurch wird das Textil an sich zur Elektrode.

Eine Leuchtschicht der Erfindung enthält als Leuchtsubstanz anorganische Leuchtpigmente (Elektrolumineszenzteilchen) und wird dann auch Leuchtpigmentschicht genannt. Diese anorganischen Leuchtpigmente ergeben eine gegenüber organischen Pigmenten erhöhte Haltbarkeit des Leuchtelements. Eine solche Leuchtpigmentschicht weist während der Herstellung und vor dem Trocknen des Leuchtelements Pigmente in einer wässrigen Dispersion auf. Die Leuchtschicht wird bevorzugt mittig, schmaler und mit einem Abstand von bevorzugt 1 cm bis 2 cm vom Rand aufgebracht.

Eine bevorzugte Ausführungsform sieht vor, dass die Leuchtschicht eine Trockenschichtdicke von weniger als 40 µm aufweist.

In einem Leuchtelement der Erfindung sind - bezogen auf das Trockengewicht - bevorzugt mindestens 10 Gew.-%, insbesondere 10 Gew.-% bis 40 Gew.-% an Schutzkolloid enthalten. Dies ist besonders vorteilhaft, wenn es sich dabei um eine Leuchtpigmentschicht handelt.

Außerdem ist es vorteilhaft, wenn die Leuchtschicht bezogen auf ihr Trockengewicht maximal 0,1 Gew.-% Wasser enthält.

Die Leuchtpigmente haben bevorzugt eine mittlere Korngröße von 0,5 µm bis 50 µm, insbesondere von 20 µm bis 40 µm. Vorteilhaft werden Zinksulfide als Leuchtpigmente eingesetzt, die mit Fremdatomen wie Cu, Mn, Ag, Au, Pb, P, As, Sb, Sn, V, Tl, Sc oder Mischungen solcher Fremdatome dotiert sind. Neben der Frequenz der angelegten Wechselspannung bestimmt die Dotierung die Lichtfarbe. Mit einer Mischung aus verschiedenen Pigmenten oder dem Aufbringen von mehreren Schichten mit unterschiedlichen Pigmenten können durch additive Lichtmischung verschiedene Farbnuancen erzeugt werden oder auch eine weiße Farbe.

Um die Lebensdauer der Leuchtpigmente zu erhöhen, werden diese bevorzugt mit Al₂O₃ oder SiO₂ gekapselt. Sie können jedoch auch in lipophilen organischen Bindemitteln eingebettet sein.

Eine Isolierschicht dient zur elektrischen Isolierung der Leuchtschicht von einer Elektrode. Diese Schicht wird auch als Dielektrikum bezeichnet. Sie dient bevorzugt gleichzeitig auch als Reflektionsschicht, die das in der Leuchtschicht erzeugte Licht in Richtung des Betrachters reflektiert.

Solch eine Isolierschicht enthält vorteilhaft ein Schutzkolloid in einer Menge von 0,5 bis 1,5 g/m², bevorzugt von 0,6 bis 1,0 g/m², wobei als Schutzkolloid Gelatine bevorzugt ist.

In einer vorteilhaften Ausführungsform weist die Isolierschicht zudem wenigstens einen elektrisch isolierenden Bestandteil (Nichtleiter) auf, z.B. eine Polyurethan-Dispersion.

Neben der isolierenden Eigenschaft ist eine hohe Reflexionswirkung der Isolierschicht für das emittierte Licht aus der Leuchtschicht von großer Bedeutung für die Lichtausbeute der Elektrolumineszenzanordnung. Da die darüber liegende Rückelektrode Licht stark absorbiert, ginge sonst der zur Rückelektrode hin emittierte Anteil an Lumineszenzstrahlung verloren, wenn diese nicht in Richtung des Betrachters reflektiert würde.

Daher kann die Isolierschicht optional weitere Zusätze wie z.B. reflektierende Pigmente wie Titandioxid umfassen.

Die Isolierschicht wird gegenüber der Leuchtpigmentschicht bevorzugt an jeder Seite so gering wie möglich, aber maximal 33 mm, bevorzugt zwischen 0,2 und 10 mm breiter als die darunter liegende Licht emittierende Schicht aufgetragen, um die gesamte Oberfläche der Leuchtschicht abzudecken. Das Dielektrikum kann als eine Schicht appliziert werden, Kurzschlüsse werden jedoch zuverlässiger vermieden, indem mehrere Schichten, insbesondere 2, 3, 4, 5, 6 oder mehr als 6 Schichten eines Dielektrikums appliziert werden.

Eine besondere Ausführungsform sieht vor, dass die Isolierschicht der Elektrolumineszenzanordnung reflektierende Stoffe, insbesondere Titandioxid in einer wasserlöslichen Bindemittelmatrix wie beispielsweise Gelatine vorzugsweise nebst polymeren Weichmachern aufweist. Die Gesamttrockenschichtdicke der Isolierschicht beträgt bevorzugt 10 µm bis 50 µm.

Eine Rückelektrode besteht aus einem elektrisch leitenden Material und kann sowohl transparent z.B. wie die Frontelektrode, oder opak aufgebaut sein.

Das elektrisch leitende Material ist bevorzugt in einer Menge von 2 bis 20 g/m², insbesondere von 5 bis 15 g/m² und besonders bevorzugt von 7 bis 12 g/m² in der Rückelektrodenschicht enthalten. Bevorzugt wird ein stark lichtabsorbierendes leitendes Material eingesetzt, wie z.B. Ruß. Alternativ kann auch ein stark lichtabsorbierendes Material zusätzlich in der Schicht enthalten sein.

Die leitfähige Rückelektrode wird bevorzugt mittig aufgetragen und bedeckt vorzugsweise dieselbe Fläche wie die Leuchtpigmentschicht oder überlappt diese leicht ohne die Frontelektrode zu berühren. In einer vorteilhaften Ausführungsform umfasst die Rückelektrode wenigstens eine Silberschicht, die feine Silberpartikel enthält, die in einer leitfähigen Polymermatrix (zum Beispiel Polyanilin) dispergiert sind. Die Schichtdicke der Rückelektrode kann z.B. etwa 10 µm bis 80 µm betragen.

Die Leiterbahnen bewirken eine Verbesserung der elektrischen Versorgung und damit eine Verbesserung der Leuchtwirkung, die sich insbesondere durch ein gleichmäßiges großflächiges Leuchten des Lampenaufbaus bzw. Leuchtelements bemerkbar macht. Dies kann durch ein Anbringen eines Anschlusses auf der Frontelektrodenschicht gewährleistet werden. Der Anschluss umfasst eine solche Leiterbahn, die auch als Bus-Bar bezeichnet wird. Hierzu wird eine z.B. etwa 1 cm breite Leiterbahn auf die Frontelektrode aufgebracht, die nicht in Kontakt mit der Rückelektrode geraten soll, da sonst ein Kurzschluss die Funktion der Anordnung zerstört. Für die Bus-Bar wird bevorzugt dieselbe Substanz wie für die Rückelektrode eingesetzt. Bei einer ausreichend hohen Leitfähigkeit der Frontelektrode kann die Bus-Bar auch wegfallen.

Alternativ kann auch ein Metallgitter, z.B. aus Silber zum Einsatz kommen.

Bevorzugt wird eine Deckschicht als Barriereschicht verwendet, die das Leuchtelement und insbesondere die Leuchtschicht vor Luftsauerstoff und Feuchtigkeit und gegebenenfalls vor Chemikalien und mechanischen Beschädigungen schützt. Die Barriere sollte elektrisch isolierend wirken, um den Anwender vor Verletzungen durch den elektrischen Strom zu schützen. An den Anschlussteilen für Front- und Rückelektrode kann die Barriereschicht ausgespart bleiben.

Als Barriereschicht ist beispielsweise Actega Terraflex Barriere Lack neben einer Polyethylen- oder einer Polyvinylidenfluoriddispersion (PVDF) geeignet. Alternativ kommen auch andere kommerziell erhältliche Barriereschichten aus Glas oder Folie in Frage.

Die Kontaktierung des Leuchtelements erfolgt bevorzugt über leitfähige Materialien, insbesondere Bleche, die z.B. mit einem leitfähigen Klebeband wie z.B. 3M™ Electrically Conductive Adhesive Transfer Tape (ECATT) 9723 auf die Bus-Bar und/oder die Rückelektrode aufgeklebt werden.

Des Weiteren kann das Leuchtelement z.B. noch die folgenden Schichten bzw. Schichtzusätze aufweisen:
eine oder mehrere Antistatikschichten, wie z.B. beschrieben in Research Disclosure 38957, September 1996, S. 591 ff., IX-C. Der Inhalt der gesamten Schrift wird hiermit per Referenz in die Anmeldung übernommen,
ein oder mehrere Begusshilfsmittel, wie z.B. beschrieben in Research Disclosure 38957, September 1996, S. 591 ff., IX-A. Der Inhalt der gesamten Schrift wird hiermit per Referenz in die Anmeldung übernommen und
eine oder mehrere "Non-Curling" Schichten, die die Planlage des Elements verbessern können.

In einer bevorzugten Ausführungsform der Erfindung werden einer, mehreren oder allen Schichten ein oder mehrere Härtungsmittel (Vernetzer, Crosslinker) zugegeben und damit die Schichten nach Beguss und Trocknung gehärtet, um eine gute Wasserfestigkeit zu erreichen. Es wird dafür ein für die jeweilige Matrix passender Vernetzer eingesetzt. Für Gelatine enthaltenden Schichten eignen sich z. B. die in der Research Disclosure 38957, September 1996, S. 591 ff., II-B, angegebenen Stoffe, insbesondere Glyoxal, Divinylsulfonhärter oder für eine schnelle Aushärtung ein Soforthärtungsmittel wie z.B. H-1 (siehe unten). Für Matrices mit Hydroxylgruppen, wie Polyvinylalkohole, Cellulosederivate oder Polyethylenglykole, kommen als Vernetzer z.B. trifunktionelle Isocyanate, wie z.B. Desmodur N 3300 zum Einsatz.

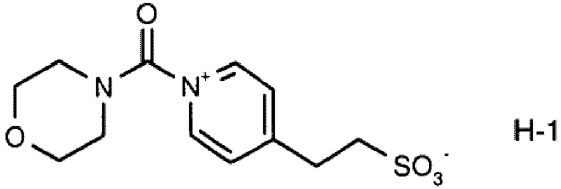

Das erfindungsgemäße Verfahren zur Herstellung eines derartigen Leuchtelementes der Erfindung beinhaltet den Verfahrensschritt, dass wenigstens eine Schicht, d.h. ein Teil des Schichtpaketes, und insbesondere ein Teil der Leuchtschicht, in einem Gussverfahren hergestellt werden. Vorzugsweise wird das gesamte Schichtpaket, insbesondere die gesamte Elektrolumineszenzanordnung, und besonders bevorzugt wenigstens die gesamte Leuchtschicht als einzelne Schicht oder in Form von mehreren Schichten in einem Gießverfahren auf einen Träger aufgebracht. Alle oder einzelne der genannten Schichten können aber auch mit einem anderen geeigneten Verfahren auf einen Träger aufgebracht werden.

Geeignete Verfahren für das Auftragen von Schichten, insbesondere von Leuchtschichten, auf einen Träger sind die Rakelbeschichtung, Tauchbeschichtung, Sprühbeschichtung oder Walzenbeschichtung, auch mit gegenläufiger Walze oder in einer bevorzugten Ausführungsform eine Einfach- oder Mehrfachbeschichtung durch das Kaskaden- oder Vorhanggießverfahren.

Die einzelnen Schichtbestandteile werden dafür soweit erforderlich emulgiert oder dispergiert und in eine für wasserhaltige Gießlösungen verwendbare Zubereitung überführt. Das heißt, für wenigstens eine Schicht wird eine wasserbasierte Zusammensetzung verwendet. Es kommt bevorzugt ausschließlich demineralisiertes entkeimtes Wasser zum Einsatz. Die Konzentrationen der Lösungen hängen vom gewählten Auftragsverfahren ab und variieren in Abhängigkeit vom gewählten Nassauftrag. Die Gießlösungen werden mit einem dem Stand der Technik entsprechenden Auftragsverfahren aufgetragen.

In einer vorteilhaften Ausführung der Erfindung werden bei der Herstellung des Leuchtelements nur so viele leichtflüchtige organische Lösungsmittel verwendet, dass die Herstellung ohne explosionsgeschützte Vorrichtungen erfolgen kann.

Dies wird dadurch erreicht, dass für die Zubereitungen, die für die Herstellung der einzelnen Schichten des Leuchtelements verwendet werden, soweit möglich wasserbasierte Zusammensetzungen verwendet werden. Bevorzugt werden für alle Schichten des Leuchtelements wasserbasierte Zusammensetzungen eingesetzt. Unter wasserbasierter Zusammensetzung ist eine Zusammensetzung zu verstehen, die gelöste oder dispergierte Substanzen enthält und deren flüchtige Inhaltsstoffe, die nach der Herstellung des Leuchtelements durch Trocknung größtenteils entfernt werden, zu wenigstens 50 Gew.-%, bevorzugt zu wenigstens 80 Gew.-% und besonders bevorzugt zu wenigstens 95 Gew.-% aus Wasser bestehen.

Damit die jeweilige wässrige Dispersion eine für das jeweilige Herstellungsverfahren ausreichende Dispersionsstabilität besitzt, wird vorgeschlagen, dass die Dispersion nach Zusatz des in Wasser dispergierbaren oder in Wasser löslichen Schutzkolloids eine Viskosität von weniger als 400 mPa*s (bevorzugt 120 - 200 mPa*s) hat. Die Viskosität der Dispersion wird bevorzugt mit einem Rotationsviskosimeter (z.B. Brookfield Viskosimeter DVII) bei einer Temperatur von 40°C gemessen.

Die Erfindung umfasst somit Leuchtelemente, die unter Verwendung wasserbasierter Zubereitungen hergestellt sind.

Für die Herstellung des Leuchtelements kommt eine Gießapparatur zum Einsatz, die auf die jeweils erforderliche Breite angepasst werden kann.

Das Leuchtelement ist bevorzugt so hergestellt, dass es mit Werkzeugen wie Scheren oder Schneidwalzen geschnitten werden kann, ohne die Funktion zu beeinträchtigen.

In einer weiteren Ausführung der Erfindung werden wenigstens eine Schicht, bevorzugt mehr als eine Schicht und besonders bevorzugt alle Schichten unter Verwendung wasserbasierter Tinten mit einem Druckverfahren, insbesondere einem Tintenstrahldruckverfahren aufgebracht.

Derartige Leuchtelemente eignen sich z.B. als Zelt-oder Fahrzeugplane und können auch als Innenverkleidung eines Fahrzeugs oder für andere Beleuchtungszwecke Verwendung finden.

### Beispiele

### Beispiel 1 - Herstellung der Gießlösung für eine Leuchtschicht

Ein beispielhaftes Rezept zur Herstellung einer Lösung für den Guss einer Leuchtschicht besteht aus den folgenden Substanzen:
4,16 g/m² Fotogelatine,
19,02 g/m² destilliertes Wasser und
11,83 g/m² Leuchtpigment GTP GG44.

Die Fotogelatine wird in destilliertes Wasser bei 20°C eingerührt. Das Gemisch muss 1 Stunde quellen.

Bei 45 °C wird das Gelatine-Wasser-Gemisch langsam digeriert bis die Gelatine vollständig geschmolzen ist.

Das Leuchtpigment wird 20 Minuten (Min.) vor Beguss der wässrigen Gelatinelösung zugesetzt und die Dispersion 15 Min. digeriert. Es schließt sich eine Ultraschallentgasung von 5 Min. an.

Die Dispersion wird mit einem Nassauftrag von 25 µm per Rakel-, Rollen- oder Kaskadenguss auf den substrierten Träger aufgebracht. Die Trocknungszeit beträgt ca. 30 Min. bei 40°C.

Diese Leuchtschicht ist nur ein Teil eines Leuchtelementes, das üblicherweise aus Haftschicht, Frontelektrodenschicht, Leuchtschicht, Dielektrikum und Rückelektrodenschicht besteht.

### Beispiel 2 - Leuchtelement

Ein besonders bevorzugtes wasserbasiertes Leuchtelement wird hergestellt, indem auf eine Polyesterunterlage (Hersteller: Agfa Gevaert N.V., Dicke: 125 µm, Handelsname Astera 125, einseitig substriert) nacheinander die nachfolgend beschriebenen Schichten (Schichtpaket 1) aufgebracht werden.

Die verwendeten Bausteine (siehe die nachfolgende Tabelle) sind kommerziell erhältlich.

| **Produkt** | **Wirkstoff (Wirkstoffklasse)** | **Hersteller/Bezugsquelle** |
|---|---|---|
| Imagel AP | Gelatine (Schutzkolloid) | Gelita |
| Proxel U5 | 1,2-Benzisothiazol-3(2H)-on (Biozid) | Arch Chemicals, Inc. |
| Polymerdispersion, Copolymer aus Polyethylen und Polyarylat | Polyethylenacrylat (Weichmacher) | Agfa Labs |
| Metaupon OMT | Natrium-2-[methyloleoyl-amino]ethan-1-sulfonat (Netzmittel) | Leuna-Tenside GmbH |
| TERGITOL^{®} | Nonylphenol-polyethylenglykolether (Netzmittel) | Union Carbide |
| Clevios SV4 | PEDOT:PSS (Leitfähiger Stoff) | Heraeus |
| Leuchtpigment GG44 | Zinksulfid (Leuchtsubstanz) | GT&P |
| CMC Carboxymethylcellulose | Carboxymethylcellulose (Schutzkolloid) | Alfa Aesar |
| Dynasylan F8815 | Fluoralkylsilan (Haftvermittler) | Evonik |
| Tubicoat MEA | Polyurethan Dispersion (Nichtleiter) | CHT R. Breitlich GmbH |
| Titandioxid-Dispersion | TiO₂ (Reflektierender Stoff) | Kronos Titan GmbH |
| Ruß (Carbon Black) | Kohlenstoff (Leitfähiger Stoff) | Evonik Carbon Black GmbH |
| Aquatix 8421 | Ethylen-Vinylacetat Copolymerwachs (Schutzkolloid) | BYK-Chemie GmbH |

Die Schichten werden mit einem Kaskadengießer in einem Durchgang aufgetragen (Mehrfachbeguss). Die für eine gute Gießrheologie erforderlichen Konzentrationen, die Wassermengen pro Gießlösung und deren Viskosität werden nach bekannten Methoden ermittelt und berücksichtigt.

Die im Folgenden angeführten Aufträge der Schichtbestandteile sind in g/m² angegeben. Die Werte in den geschweiften Klammern geben einen sinnvollen Mengenbereich an und die Werte in den eckigen Klammern bezeichnen Mengenbereiche für ein besonders bevorzugtes Ausführungsbeispiel mit hoher Leuchtdichte bei guter Haltbarkeit. So werden in der Haftschicht bevorzugt 1,5 g/m² bis 3,2 g/m² Gelatine eingesetzt und besonders bevorzugt 1 ,8 g/m² bis 2,8 g/m².

Die jeweils genannten Mengen sind nicht auf das Ausführungsbeispiel beschränkt, sondern gelten allgemein für entsprechende Schichten der Erfindung bzw. die darin enthaltenen Zusatzstoffe. So gilt z.B. die für die Haftschicht erläuterte Angabe der darin bevorzugt enthaltenen Gelatinemenge im Kontext der Erfindung auch als bevorzugter Mengenbereich für Gelatine in einer beliebigen Haftschicht unabhängig von den anderen Inhalts Stoffen und unabhängig von dem jeweiligen Aufbau des Leuchtelements. Darüber hinaus gelten die Angaben nicht nur für den konkreten bevorzugten Zusatzstoff (Wirkstoff) in der Schicht, sondern auch für andere geeignete Vertreter der jeweiligen Wirkstoffklasse. Die Mengenangaben z.B. für Gelatine in der Haftschicht gelten somit auch für andere geeignete Schutzkolloide. Dies gilt entsprechend für alle in der voranstehenden Tabelle aufgeführten Wirkstoffe und die in Klammern angegebene jeweilige Wirkstoffklasse.

Der Wert vor den Klammern stellt die in dem konkreten Ausführungsbeispiel eingesetzte Menge an Wirkstoff dar.

### Schichtpaket 1

**Schicht 1 (Haftschicht)**

| | |
|---|---|
| Gelatine | 2,38{1,5[1,8-2,8]3,2} |
| 1,2-Benzisothiazol-3(2H)-on | 0,007{0,003[0,005-0,008]0,015} |
| Polyethylenacrylat | 0,24{0,15[0,18-0,28]0,32} |
| Natrium-2-[methyloleoylamino]ethan-1-sulfonat | 0,095{0,095[0,72-0,11]0,13} |
| Nonylphenol-polyethylenglykolether | 0,060{0,05[0,05-0,2]0,3} |

**Schicht 2 (Frontelektrode)**

| | |
|---|---|
| Clevios SV4 | 20,5{18,0[19,0-28,0]36,0} |
| Nonylphenol-polyethylenglykolether | 0,14 {0,10[0,12-0,18]0,20} |

**Schicht 3 (Leuchtschicht)**

| | |
|---|---|
| Gelatine | 1,80{1,0[1,2-3,2]3,4} |
| Leuchtpigment GG44 | 18,0{10,0[16,0-24,0]28,0} |
| Carboxymethylcellulose | 0,18{0,10[0,12-0,32]0,34} |
| Polyethylenacrylat | 0,480{0,27[0,32-0,85]0,90} |
| Natrium-2-[methyloleoylamino]ethan-1sulfonat | 0,192{0,11[0,13-0,33]0,35} |
| Dynasylan F8815 | 0,240{0,01[0,02-0,25]0,26} |

**Schicht 4 (Dielektrikum)**

| | |
|---|---|
| Tubicoat MEA | 27,4{20,0[25,0-35,0]75,0} |
| Titandioxid | 9,14{0,50[0,60-10,0]30,0} |
| Gelatine | 0,640{0,60[0,60-0,80]1,5} |

**Schicht 5 (Rückelektrode)**

| | |
|---|---|
| Proxel U5 | 0.040{0,01[0,02-0,08]0,16} |
| Gelatine | 8,58{4,0[5,0-9,0]9,2} |
| Ruß (Carbon Black) | 7,42{7,0[7,2-10,0]14,0} |
| Nonylphenol-polyethylenglykolecher | 0,044{0,04[0,042-0,08]0,10} |
| Aquatix 8421 | 22,2{15,0[17,0-23,0]25,0} |

Im Vergleich zu Leuchtelementen, die nach dem Stand der Technik hergestellt werden, liefert das oben beschriebene Leuchtelement eine hohe Leuchtdichte bei hoher Lebensdauer. Es ermöglicht kleine Biegeradien von ca. 3 mm (sowohl Zug als auch Druck) durch die hohe Flexibilität der Schichten. Bei der Herstellung werden keine organischen Lösemittel verwendet, der Einsatz von Schwermetallen ist nicht notwendig und die Produktionskosten sind niedrig. Aufwendungen für Explosionsschutz fallen nicht an. Anfallende Produktionsabfälle müssen nicht als Sondermüll entsorgt werden.

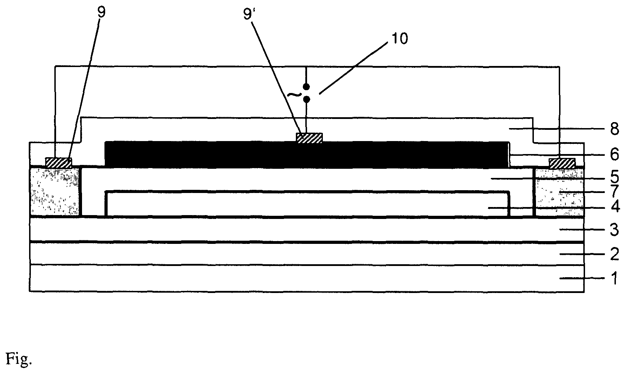

Ein Ausführungsbeispiel mit einem vorteilhaften Schichtaufbau zeigt die Figur.

Auf einen Träger 1 ist eine Haftschicht 2 aufgebracht. Darauf liegt eine transparente und elektrisch leitfähige Schicht als Frontelektrode 3. Im mittleren Bereich liegt auf der Frontelektrode 3 eine Leuchtschicht 4, über der eine Isolierschicht 5 liegt, die im Randbereich bis an die Frontelektrode 3 reicht. Über der Leuchtschicht 4 liegt die Rückelektrode 6, die ebenso im mittleren Bereich liegt. An den Rändern außerhalb des mittleren Bereiches angeordnete Leiterbahnen 7 dienen als Anschluss der Frontelektrode 3. Über der Rückelektrode liegt eine Barriereschicht 8, die sich über die gesamte Breite erstreckt. Kontakte 9 an den Leiterbahnen 7 und 9' an der Rückelektrode 6 dienen als Anschluss an eine Wechselspannungsquelle 10.

## Patentansprüche

1. Leuchtelement mit einer Elektrolumineszenzanordnung umfassend eine Leuchtschicht (4), die anorganische Elektrolumineszenzteilchen aufweist, **dadurch gekennzeichnet, dass** die Leuchtschicht, bezogen auf ihr Trockengewicht, mindestens 10 Gew.-% eines in Wasser dispergierbaren oder in Wasser löslichen Schutzkolloids aufweist.

2. Leuchtelement nach Anspruch 1, **dadurch gekennzeichnet, dass** die Leuchtschicht mindestens einen Weichmacher aufweist.

3. Leuchtelement nach einem der vorstehenden Ansprüche, **dadurch gekennzeichnet, dass** das Schutzkolloid Gelatine aufweist.

4. Leuchtelement nach einem der vorstehenden Ansprüche, **dadurch gekennzeichnet, dass** die Elektrolumineszenzteilchen dotiertes Zinksulfid, bevorzugt verkapseltes Zinksulfid aufweisen.

5. Leuchtelement nach einem der vorstehenden Ansprüche, **dadurch gekennzeichnet, dass** die Leuchtschicht bezogen auf ihr Trockengewicht maximal 0,1 Gew.-% Wasser enthält.

6. Leuchtelement nach einem der vorstehenden Ansprüche, **dadurch gekennzeichnet, dass** das Leuchtelement bezogen auf das Trockengewicht maximal 0,005 Gew.-% organische Lösungsmittel mit Ausnahme von Ethanol, Isopropanol oder Butanolen enthält.

7. Leuchtelement nach einem der vorhergehenden Ansprüche, **dadurch gekennzeichnet, dass** die Leuchtschicht auf einem Träger (1) angeordnet ist.

8. Leuchtelement nach einem der vorhergehenden Ansprüche, **dadurch gekennzeichnet, dass** die Leuchtschicht eine Dicke von weniger als 40 µm aufweist.

9. Leuchtelement nach einem der vorhergehenden Ansprüche **dadurch gekennzeichnet, dass** es eine alkohollösliche, transparente, leitfähige Frontelektrodenschicht (3) aufweist.

10. Leuchtelement nach Anspruch 9, **dadurch gekennzeichnet, dass** die Frontelektrodenschicht eine Dicke von weniger als 20 µm aufweist.

11. Verfahren zur Herstellung eines Leuchtelementes nach einem der vorhergehenden Ansprüche, **dadurch gekennzeichnet, dass** wenigstens eine Schicht in einem Gussverfahren hergestellt wird.

12. Verfahren nach Anspruch 11, **dadurch gekennzeichnet, dass** wenigstens ein Teil der Leuchtschicht in einem Gussverfahren hergestellt wird.

13. Verfahren nach einem der Ansprüche 11 bis 12, **dadurch gekennzeichnet, dass** für wenigstens eine Schicht eine wasserbasierte Zusammensetzung verwendet wird.

14. Verfahren nach Anspruch 13, **dadurch gekennzeichnet, dass** es sich bei der Zusammensetzung um eine Dispersion handelt, die ein in Wasser dispergierbares oder in Wasser lösliches Schutzkolloid aufweist und eine Viskosität von weniger als 400 mPa·s hat.

15. Verfahren nach einem der Ansprüche 11 bis 14, **dadurch gekennzeichnet, dass** alle Schichten des Leuchtelements in einem Gussverfahren unter Verwendung wasserbasierter Zusammensetzungen hergestellt werden.

## Claims

1. A luminous element with an electroluminescent arrangement comprising a luminous layer (4) that features inorganic electroluminescent particles, **characterized in that** the luminous layer comprises at least 10 wt.% of a protective colloid, which can be dispersed in water or dissolved in water, referred to its dry weight.

2. The luminous element according to claim 1, **characterized in that** the luminous layer comprises at least one softener.

3. The luminous element according to one of the preceding claims, **characterized in that** the protective colloid comprises gelatin.

4. The luminous element according to one of the preceding claims, **characterized in that** the electroluminescent particles comprise doped zinc sulfide, preferably encapsulated zinc sulfide.

5. The luminous element according to one of the preceding claims, **characterized in that** the luminous layer contains no more than 0.1 wt.% of water referred to its dry weight.

6. The luminous element according to one of the preceding claims, **characterized in that** the luminous element contains no more than 0.005 wt.% of organic solvents with the exception of ethanol, isopropanol or butanols referred to the dry weight.

7. The luminous element according to one of the preceding claims, **characterized in that** the luminous layer is arranged on a substrate (1).

8. The luminous element according to one of the preceding claims, **characterized in that** the luminous layer has a thickness of less than 40 µm.

9. The luminous element according to one of the preceding claims, **characterized in that** it comprises an alcohol-soluble, transparent and conductive front electrode layer (3).

10. The luminous element according to claim 9, **characterized in that** the front electrode layer has a thickness of less than 20 µm.

11. A method for manufacturing a luminous element according to one of the preceding claims, **characterized in that** at least one layer is manufactured in a casting process.

12. The method according to claim 11, **characterized in that** at least part of the luminous layer is manufactured in a casting process.

13. The method according to one of claims 11-12, **characterized in that** a water-based composition is used for at least one layer.

14. The method according to claim 13, **characterized in that** the composition consists of a dispersion, which comprises a protective colloid that can be dispersed in water or dissolved in water and has a viscosity of less than 400 mPa·s.

15. The method according to one of claims 11-14, **characterized in that** all layers of the luminous element are manufactured in a casting process by using water-based compositions.

## Revendications

1. Elément lumineux comportant un dispositif électroluminescent comprenant une couche luminescente (4), qui présente des particules électroluminescentes anorganiques, **caractérisé en ce que** la couche luminescente, rapporté à son poids sec, présente au moins 10% en poids d'un colloïde protecteur dispersable dans l'eau ou soluble dans l'eau.

2. Elément lumineux selon la revendication 1, **caractérisé en ce que** la couche luminescente présente au moins un plastifiant.

3. Elément lumineux selon une des revendications précédentes, **caractérisé en ce que** le colloïde protecteur présente de la gélatine.

4. Elément lumineux selon une des revendications précédentes, **caractérisé en ce que** les particules électroluminescente présentent du sulfure de zinc dopé, de préférence du sulfure de zinc encapsulé.

5. Elément lumineux selon une des revendications précédentes, **caractérisé en ce que** la couche luminescente présente au maximum 0,1% en poids rapporté à son poids sec.

6. Elément lumineux selon une des revendications précédentes, **caractérisé en ce que** l'élément lumineux rapporté au poids sec contient au maximum 0,005% en poids d'un solvant organique à l'exception de l'éthanol, isopropanol ou butanol.

7. Elément lumineux selon une des revendications précédentes, **caractérisé en ce que** la couche luminescente est disposée sur un support (1).

8. Elément lumineux selon une des revendications précédentes, **caractérisé en ce que** la couche luminescente présente une épaisseur de moins de 40 µm.

9. Elément lumineux selon une des revendications précédentes, **caractérisé en ce que** il présente une couche d'électrode avant (3) conductrice, transparente, soluble à l'alcool.

10. Elément lumineux selon la revendication 9, **caractérisé en ce que** la couche d'électrode avant présente une épaisseur de moins de 20 µm.

11. Procédé de fabrication d'un élément lumineux selon une des revendications précédentes, **caractérisé en ce que** au moins une couche est fabriquée dans un procédé de coulée.

12. Procédé selon la revendication 11, **caractérisé en ce que** au moins une partie de la couche luminescente est fabriquée dans un procédé de coulée.

13. Procédé selon une des revendications 11 à 12, **caractérisé en ce que** pour au moins une couche, une composition à base d'eau est utilisée.

14. Procédé selon la revendication 13, **caractérisé en ce que** la composition consiste en une dispersion, qui présente un colloïde protecteur dispersable dans l'eau ou soluble dans l'eau et a une viscosité inférieure à 400 mPa.s.

15. Procédé selon une des revendications 11 à 14, **caractérisé en ce que** toutes les couches de l'élément lumineux sont fabriquées dans un procédé de coulée en utilisant des compositions à base d'eau.
